# EUROPÄISCHE PATENTSCHRIFT

(11) **EP 2 577 237 B1**
(45) Veröffentlichungstag und Bekanntmachung des Hinweises auf die Patenterteilung: **28.06.2017**
(21) Anmeldenummer: 11719531.3
(22) Anmeldetag: 10.05.2011
(51) Int. Cl.: G01F 15/14, G01F 1/684, G01F 15/12

(54) **LUFTMASSENMESSER**
AIR FLOWMETER
DÉBITMÈTRE D'AIR MASSIQUE

(30) Priorität: 28.05.2010 DE 102010020264
(43) Veröffentlichungstag der Anmeldung: 10.04.2013
(73) Patentinhaber: Continental Automotive GmbH, 30165 Hannover (DE)
(72) Erfinder: FRAUENHOLZ, Rainer, 93186 Pettendorf (DE); SETESCAK, Stephen, 93080 Pentling (DE)
(86) Internationale Anmeldenummer: PCT/EP2011/057511
(87) Internationale Veröffentlichungsnummer: WO 2011/147681

(56) Entgegenhaltungen:
- WO-A1-2008/006945
- DE-A1-102005 057 575
- JP-A- 63 218 821

## Beschreibung

Die Erfindung betrifft einen Luftmassenmesser mit einem Gehäuse aus Kunststoff, der elektrisch isolierend wirkt, wobei in dem Gehäuse ein Strömungskanal ausgebildet ist und mit einem Sensorelement, das in dem Gehäuse angeordnet ist und das die im Strömungskanal strömende Luftmasse erfasst und wobei in dem Gehäuse Leiterbahnen angeordnet sind, die das Sensorelement mit Anschlusspins verbinden.

Der Begriff Luft wird im Kontext dieser Anmeldung als Beispiel für ein Gas oder Gasgemisch, dessen Massenstrom bestimmt werden kann, genutzt. Grundsätzlich kann mit dem erfindungsgemäßen Luftmassenmesser der Massenstrom eines jeden Gases oder Gasgemisches bestimmt werden.

Derartige Luftmassenmesser sind bekannt, und sie werden in großer Zahl zum Beispiel im Automobilbau eingesetzt, um die zu einer Brennkraftmaschine strömende Luftmasse zu erfassen. Abhängig von dem durch den Luftmassenmesser erfassten Luftmassenstrom können sowohl Diagnosen, beispielsweise des Betriebs der Brennkraftmaschine, durchgeführt werden, als auch eine Steuerung der Brennkraftmaschine erfolgen. Zu diesen Zwecken ist ein auch unter unterschiedlichen Betriebsbedingungen zuverlässiges und möglichst präzises Erfassen des tatsächlichen Luftmassenstroms wichtig.

Aus der EP 0 458 998 A1 ist ein Luftmassenmesser mit einem Gehäuse bekannt, in dem ein Strömungskanal ausgebildet ist und in dem ein Strömungsgleichrichter stromaufwärts eines Sensorelements eingebracht ist. Der Strömungsgleichrichter umfasst einen Wabenkörper und einen Ring, der in Strömungsrichtung über die Waben hinausragt und in dem ein Gitter beabstandet zu den Waben eingebettet ist, das Mikrowirbel erzeugt.

Die JP 63 218821 A offenbart eine Messvorrichtung für Brennkraftmaschinen zum Messen einer Luftmasse.

Aus der DE 10 2005 057 575 A1 ist ein Luftmassenmesser zur Messung eines Luftmassenstroms bekannt. Der Luftmassenmesser weist eine vom Luftmassenstrom überströmbare Sensorfläche und eine Felderzeugungsvorrichtung auf, welche ausgestattet ist, um ein zumindest teilweise homogenes elektrisches Feld zu erzeugen. Durch elektrische Effekte kann unter Verwendung des Luftmassenmessers eine Kontamination der Sensoroberfläche durch Öltröpfchen vermindert werden.

Die WO 2008/006945 A1 betrifft eine Lösung eines inhärenten leitenden Polymers in einer Polarlösung.

Es ist Aufgabe der vorliegenden Erfindung, einen Luftmassenmesser anzugeben, der kostengünstig herstellbar ist und eine genaue Messung eines Luftmassenstromes ermöglicht, wobei der Luftmassenmesser über eine möglichst lange Zeit fehlerfrei funktionieren soll.

Diese Aufgabe wird durch die Merkmale des unabhängigen Patentanspruches gelöst.

Dadurch, dass das gesamte Gehäuse aus Kunststoff besteht und zumindest ein Teil des Strömungskanals elektrostatisch dissipative Eigenschaften aufweist, ist der Luftmassenmesser besonders kostengünstig, zum Beispiel im Spritzgussverfahren herstellbar. Weil zumindest ein Teil des Strömungskanals elektrostatisch dissipative Eigenschaften aufweist, werden elektrisch geladene Schmutzpartikel entladen, bevor sie das Sensorelement erreichen können. Eine Ansammlung elektrisch geladener Schmutzpartikel auf dem Sensorelement wird damit unterbunden. Da sich keine Schmutzpartikel auf dem Sensorelement ablagern, ist über gesamte Lebensdauer des Luftmassenmessers eine präzise und störungsfreie Messung der im Rohr strömenden Luftmasse möglich. Als elektrostatisch dissipativ werden im Kontext dieser Schrift Bereiche bezeichnet, deren Flächenwiderstand kleiner als 10¹² Ohm ist. Damit ist der Flächenwiderstand klein genug, um elektrostatisch geladene Partikel in der Luftmasse zu entladen und das Sensorelement vor der Ablagerung dieser Partikel zu schützen.

Da das gesamte Gehäuse, also auch der Strömungskanal mit dem Teil mit elektrostatisch dissipativen Eigenschaften, aus Kunststoff besteht, ist eine besonders hohe Langlebigkeit des Sensors erreichbar. Im Strömungskanal befinden sich keine leitenden Bereiche, die auf den Strömungskanal aufgebracht wurden und sich eventuell wieder ablösen könnten. Der Strömungskanal bildet mit seinem elektrisch dissipativen Teil ein einstückiges Bauteil aus Kunststoff, wobei der elektrisch dissipative Bereich des Strömungskanals durch leitende Partikel im Kunststoff seine elektrisch dissipative Eigenschaft erhält.

Bei einer Weiterbildung ist das Sensorelement in MEMS Bauweise gefertigt. Gerade für Luftmassenmesser mit Sensorelementen, die Mikrosystem (MEMS)-Technik gebaut sind, ist die Ableitung geladener Schmutzpartikel in einem Teil des Strömungskanals mit elektrostatisch dissipativen Eigenschaften besonders wichtig. Wenn in dem Luftstrom geladene Schmutzpartikel (zum Beispiel geladene Staubpartikel) vorhanden sind, werden diese von den geladenen Flächen des Sensorelementes angezogen und die geladenen Schmutzpartikel setzen sich auf diesen geladenen Flächen ab. Durch die hoch isolierende Passivierungsschicht auf dem geladenen Flächen des Sensorelementes wird jedoch eine Entladung der Schmutzpartikel verhindert. Um dies zu verhindern werden die geladenen Schmutzpartikel vor dem Erreichen des in Mikrosystem (MEMS)-Technik gebauten Sensorelementes im elektrostatisch dissipativen Teil des Strömungskanals entladen, wodurch sie sich nicht mehr auf der Oberfläche des Sensorelementes ablagern können.

Bei einer nächsten Weiterbildung besteht der elektrisch dissipative Teil der Strömungskanals aus Kunststoff mit leitfähigen Polymeren und/oder aus Kunststoff mit leitfähigen Fasern und/oder aus Kunststoff mit Leitruß. Als leitfähige Fasern im Kunststoff eignen sich zum Beispiel Kohle- oder Metallpartikel. Kunststoff mit leitfähigen Bestandteilen (Polymeren, Fasern und/oder Leitruß) sind kostengünstig und leicht in den Strömungskanal integrierbar.

Wenn der elektrisch dissipative Teil der Strömungskanals mit einem festen Potential elektrisch verbunden ist, lassen sich die Ladungsträger von den Schmutzpartikeln leicht ableiten und damit erfolgt eine einfache Neutralisierung der Schmutzpartikel. Diese lagern sich damit nicht mehr auf dem Sensorelement ab.

Bei einer bevorzugten Ausführungsform ist das feste Potential die Sensormasse. Die Sensormasse stellt für den Luftmassenmesser das neutrale Bezugspotential dar und sie ist in der Lage große Mengen an Ladungsträgern aufzunehmen ohne einer Potentialverschiebung zu unterliegen.

Wenn das Gehäuse einen Gehäusekörper und einen Gehäusedeckel aufweist, ist die Herstellung des Luftmassenmessers besonders einfach. Dabei kann der elektrisch dissipative Teil der Strömungskanals im und/oder am Gehäusekörper ausgebildet sein und/oder im und/oder am Gehäusedeckel ausgebildet sein.

Die Erfindung wird nachfolgend anhand der Figuren 1 bis 6 näher erläutert.
- Figur 1: zeigt einen Luftmassenmesser in einem Rohr,
- Figur 2: zeigt eine perspektivische Ansicht des Luftmassenmessers,
- Figur 3: zeigt schematisch ein in MEMS Technologie gefertigtes Sensorelement,
- Figur 4: zeigt einen Luftmassenmesser mit einem Gehäuse,
- Figur 5: zeigt einen Gehäusedeckel,
- Figur 6: zeigt einen Gehäusekörper,
- Figur 7: zeigt noch einmal einen Gehäusedeckel.

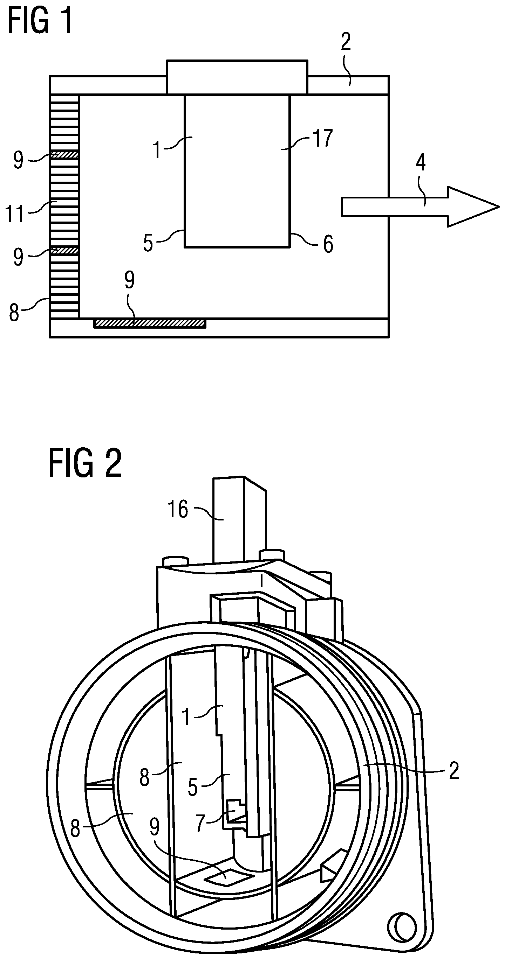

Figur 1 zeigt einen Luftmassenmesser 1. Der Luftmassenmesser 1 ist in einem Rohr 2 angeordnet. Der Luftmassenmesser 1 weist ein Gehäuse 17 mit einem Anfang 5 und einem Ende 6 im Bezug auf die Hauptströmungsrichtung 4 der Luftmasse im Rohr 2 auf. Um über alle Strömungsgeschwindigkeiten der Luftmasse im Rohr 2 fehlerfrei messen zu können, ist vor dem Luftmassenmesser 1 mit einem gewissen Abstand zu seinem Anfang 5 ein Strömungsleitelement 8 ausgebildet. Dieses Strömungsleitelement 8 besteht hier aus einem Gitter 11. Sowohl das Rohr 2 als auch das Gitter 11 können Bereiche 9 mit elektrisch dissipativen Eigenschaften aufweisen.

Figur 2 zeigt eine perspektivische Ansicht des Luftmassenmessers 1 in einem Rohr 2. Der Luftmassenmesser 1 weist einen Strömungskanal 7 auf, der einen Teil der im Rohr 2 strömenden Luft aufnimmt und über ein Sensorelement 3 leitet. Im Rohr 2 des Luftmessenmessers 1 sind ausgedehnte Strömungsleitelemente 8 angeordnet, die parallel zur Hauptströmungsrichtung 4 ausgerichtet sind. Auch diese Strömungsleitelemente 8 können Bereiche 9 elektrisch dissipativen Eigenschaften aufweisen. Darüber hinaus zeigt Figur 2 ein Anschlusselement 16 in dem die Anschlusspins angeordnet sind, die das Sensorelement 3 und seine nachfolgende elektronischen Schaltung 10 zum Beispiel mit einem elektronischen Motorsteuergerät elektrisch verbinden.

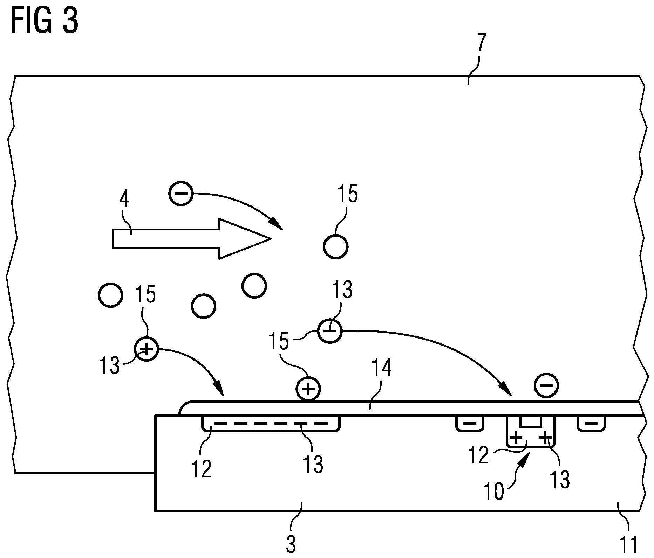

Figur 3 zeigt schematisch ein in MEMS Technologie gefertigtes Sensorelement 3 im Luftstrom 4. Moderne in Mikrosystem (MEMS)-Technik gebaute Sensorelemente 3 erfassen sehr schnell den Luftmassenstrom und messen nahezu jede Änderung in dem Luftmassenstrom 4 mit hoher Präzision. Das Sensorelement 3 und die elektronische Schaltung 10 zur Verarbeitung der Signale von dem Sensorelement 3 können in Mikrosystem-Technologie (MEMS) auf einem einzigen Halbleiterbauelement 11 ausgebildet sein. Ein Nachteil der in Mikrosystem-Technik gefertigten Sensorelemente 3 ist es, dass über den elektrisch leitenden und mit Ladungsträgern 13 geladenen Flächen 12 des Sensorelements 3 in der Regel eine dünne aber hoch isolierende Passivierungsschicht 14, zum Beispiel aus Siliziumdioxyd, angeordnet ist. Wenn in dem Luftstrom 4 geladene Schmutzpartikel 15 (zum Beispiel geladene Staubpartikel) vorhanden sind, werden diese von den geladenen Flächen 12 des Sensorelementes 3 angezogen und die geladenen Schmutzpartikel 15 setzen sich auf diesen geladenen Flächen 12 ab. Durch die hoch isolierende Passivierungsschicht 14 auf dem geladenen Flächen 12 des Sensorelementes 3 wird jedoch eine Entladung der Schmutzpartikel 15 verhindert. Die geladenen Schmutzpartikel 15 sind auf der elektrisch leitenden Fläche 12 des Sensorelementes 3 förmlich gefangen und diese Verschmutzung verfälschen die Messung der vorbeiströmenden Luftmasse 4.

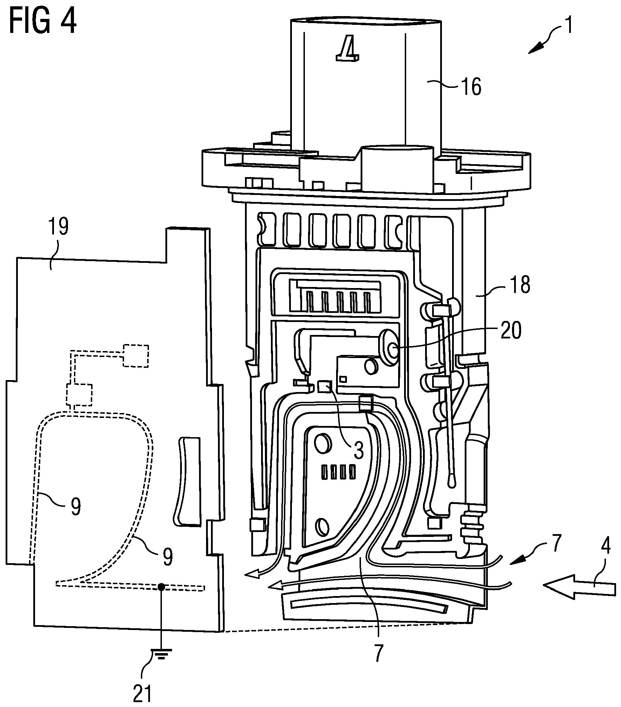

Fig. 4 zeigt einen Luftmassenmesser 1 mit einem Gehäuse 17. Das Gehäuse 17 besteht aus einem Gehäusekörper 18 und einem Gehäusedeckel 19. Am Gehäusekörper 18 ist das Anschlusselement 16 zu erkennen, in dem elektrisch leitende Pins untergebracht sind, die einen elektrischen Kontakt des Sensorelementes 3 mit einer nachfolgenden Elektronik, z. B. einem Motorsteuergerät, herstellen. Weiterhin ist im Gehäusekörper 18 der Strömungskanal 7 zu erkennen. Hier ist der Strömungskanal 7 Ω-förmig aufgebaut. Dies ist jedoch nur ein Beispiel für einen Strömungskanal. Es gibt vielfältige Ausgestaltungen für derartige Strömungskanäle in Luftmassenmessern 1. Der Gehäusedeckel 19 kann mit dem Gehäusekörper 18 verbunden werden. Dies kann z. B. durch Kleben oder Laserschweißen erfolgen. Im Gehäusedeckel 19 ist ein Bereich 9 mit elektrisch dissipativen Eigenschaften zu erkennen. Dieser Bereich 9 mit elektrisch dissipativen Eigenschaften deckt weitgehend den Strömungskanal 7 ab. Damit können im Luftstrom 4 vorhandene Schmutzpartikel 15 mit Ladungsträgern 13 durch einen Kontakt mit dem Bereich 9 mit elektrisch dissipativen Eigenschaften entladen werden. Dies stellt sicher, dass am Sensorelement 3 nur elektrostatisch neutrale Schmutzpartikel 15 mit der Luftmasse 4 vorbeiströmen. Durch die Bereiche 9 mit elektrostatisch dissipativen Eigenschaften wird mit hoher Effektivität verhindert, dass sich auf dem Sensorelement 3 elektrisch geladene Schmutzpartikel 15 absetzen. Mit dem Bezugszeichen 20 ist der Masseanschluss bezeichnet, mit dem der Bereich 9 mit elektrisch dissipativen Eigenschaften mit der Sensormasse 21 oder einem anderen festen Potential verbunden wird. Die Verbindung zur Sensormasse 21 ist in Fig. 4 schematisch an den Bereich 9 mit elektrisch dissipativen Eigenschaften angefügt.

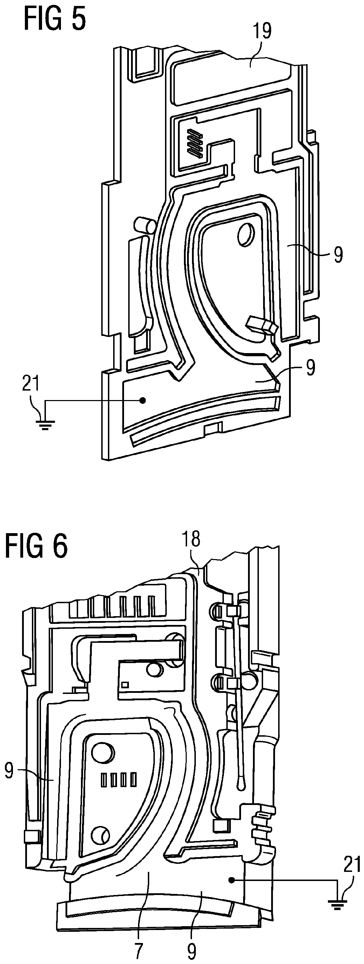

Fig. 5 zeigt den Gehäusedeckel 19 in einer detaillierteren Darstellung. Im Gehäusedeckel 19 ist der Bereich 9 mit elektrisch dissipativen Eigenschaften gut zu erkennen. Hier entspricht die Form des Bereiches 9 mit elektrisch dissipativen Eigenschaften weitgehend der Form des Strömungskanals 7. Entlang des Bereiches 9 mit elektrisch dissipativen Eigenschaften strömt die Luftmasse 4, wobei sich in ihr enthaltene Schmutzpartikel 15 an dem Bereich 9 mit elektrisch dissipativen Eigenschaften entladen können. Die Verbindung zur Sensormasse 21 ist in den Figuren 5 und 6 schematisch an den Bereich 9 mit elektrisch dissipativen Eigenschaften angefügt.

Fig. 6 zeigt den Gehäusekörper 18. Im Gehäusekörper 18 ist der Strömungskanal 7 zu erkennen, in diesem Ausführungsbeispiel ist auch der Strömungskanal 7 mit einem Bereich 9 mit elektrisch dissipativen Eigenschaften ausgestattet.

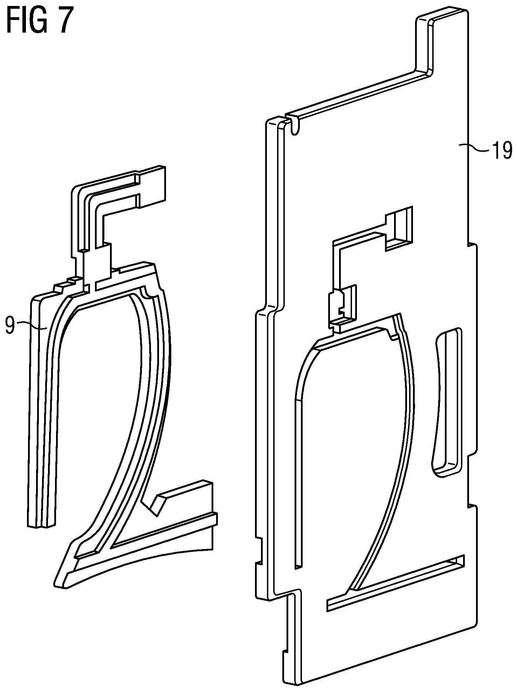

Fig. 7 zeigt noch einmal den Gehäusedeckel 19 und den Bereich 9 mit elektrisch dissipativen Eigenschaften. Zu erkennen ist der Gehäusedeckel 19, bevor der Bereich 9 mit elektrisch dissipativen Eigenschaften in diesen integriert wird. Zur Integration des Bereiches 9 mit elektrisch dissipativen Eigenschaften wird der Bereich 9 mit elektrisch dissipativen Eigenschaften in den Gehäusedeckel 19 eingepasst und zum Beispiel mit dem Gehäusedeckel verklebt oder durch Laserschweißen verbunden.

Der Bereich 9 mit elektrisch dissipativen Eigenschaften besteht aus einem Kunststoff, in dem elektrisch leitende Partikel enthalten sind. Diese elektrisch leitenden Partikel können z. B. Kohlenstoffteilchen oder feine Eisenspäne sein.

## Patentansprüche

1. Luftmassenmesser (1) mit einem Gehäuse (17) aus Kunststoff, der elektrisch isolierend wirkt, wobei in dem Gehäuse (17) ein Strömungskanal (7) ausgebildet ist und mit einem in MEMS Bauweise gefertigten Sensorelement (3), das in dem Gehäuse (17) angeordnet ist und das die im Strömungskanal (7) strömende Luftmasse (4) erfasst und wobei in dem Gehäuse (17) Leiterbahnen angeordnet sind, die das Sensorelement (3) mit Anschlusspins verbinden, wobei das gesamte Gehäuse (17) aus Kunststoff besteht und zumindest ein Bereich (9) des Strömungskanals (7) elektrostatisch dissipative Eigenschaften aufweist, **dadurch gekennzeichnet, dass** der elektrisch dissipative Bereich (9) des Strömungskanals (7) aus Kunststoff mit leitfähigen Polymeren und/oder aus Kunststoff mit leitfähigen Fasern und/oder aus Kunststoff mit Leitruß besteht.

2. Luftmassenmesser (1) nach Anspruch 1, **dadurch gekennzeichnet, dass** der elektrisch dissipative Bereich (9) des Strömungskanals (7) mit einem festen Potential elektrisch verbunden ist.

3. Luftmassenmesser (1) nach Anspruch 2, **dadurch gekennzeichnet, dass** das feste Potential die S e n s o rmasse (21) ist.

4. Luftmassenmesser (1) nach einem der vorgenannten Ansprüche, **dadurch gekennzeichnet, dass** das Gehäuse (17) einen Gehäusekörper (18) und einen Gehäusedeckel (19) aufweist.

5. Luftmassenmesser (1) nach Anspruch 4, **dadurch gekennzeichnet, dass** der elektrisch dissipative Bereich (9) des Strömungskanals (7) im und/oder am Gehäusekörper (18) ausgebildet ist.

6. Luftmassenmesser (1) nach Anspruch 4 oder 5, **dadurch gekennzeichnet, dass** der elektrisch dissipative Bereich (9) des Strömungskanals (7) im und/oder am Gehäusedeckel (19) ausgebildet ist.

## Claims

1. Air mass flow meter (1) having a housing (17) made of plastic which has an electrically insulating effect, a flow channel (7) being formed in the housing (17), and having a sensor element (3) which is produced with a MEMS design and is arranged in the housing (17) and detects the air mass (4) flowing in the flow channel (7), and conductor tracks which connect the sensor element (3) to connection pins being arranged in the housing (17), the entire housing (17) consisting of plastic, and at least one region (9) of the flow channel (7) having electrostatically dissipative properties, **characterized in that** the electrically dissipative region (9) of the flow channel (7) consists of plastic with conductive polymers and/or of plastic with conductive fibers and/or of plastic with conductive carbon black.

2. Air mass flow meter (1) according to Claim 1, **characterized in that** the electrically dissipative region (9) of the flow channel (7) is electrically connected to a fixed potential.

3. Air mass flow meter (1) according to Claim 2, **characterized in that** the fixed potential is the sensor ground (21).

4. Air mass flow meter (1) according to one of the abovementioned claims, **characterized in that** the housing (17) has a housing body (18) and a housing cover (19).

5. Air mass flow meter (1) according to Claim 4, **characterized in that** the electrically dissipative region (9) of the flow channel (7) is formed in and/or on the housing body (18).

6. Air mass flow meter (1) according to Claim 4 or 5, **characterized in that** the electrically dissipative region (9) of the flow channel (7) is formed in and/or on the housing cover (19).

## Revendications

1. Débitmètre d'air massique (1) comportant un boîtier (17) constitué de matière plastique, qui présente un effet d'isolation électrique, dans lequel un canal d'écoulement (7) est réalisé dans le boîtier (17) et comportant un élément capteur (3) réalisé sous la forme d'une structure MEMS, qui est disposé dans le boîtier (17) et qui détecte la masse d'air (4) s'écoulant dans le canal d'écoulement (7) et dans lequel des pistes conductrices qui relient l'élément capteur (3) à des broches de connexion sont disposées dans le boîtier (17), dans lequel l'ensemble du boîtier (17) est constitué de matière plastique et au moins une zone (9) du canal d'écoulement (7) présente des propriétés de dissipation électrostatique, **caractérisé en ce que** la zone (9) de dissipation électrostatique du canal d'écoulement (7) est constituée de matière plastique comportant des polymères conducteurs et/ou de matière plastique comportant des fibres conductrices et/ou de matière plastique comportant du noir de carbone conducteur.

2. Débitmètre d'air massique (1) selon la revendication 1, **caractérisé en ce que** la zone (9) de dissipation électrique du canal d'écoulement (7) est électriquement reliée à un potentiel fixe.

3. Débitmètre d'air massique (1) selon la revendication 2, **caractérisé en ce que** le potentiel fixe est le potentiel de capteur (21).

4. Débitmètre d'air massique (1) selon l'une quelconque des revendications précédentes, **caractérisé en ce que** le boîtier (17) comporte un corps de boîtier (18) et un capot de boîtier (19).

5. Débitmètre d'air massique (1) selon la revendication 4, **caractérisé en ce que** la zone (9) de dissipation électrique du canal d'écoulement (7) est réalisée dans et/ou sur le corps de boîtier (18).

6. Débitmètre d'air massique (1) selon la revendication 4 ou 5, **caractérisé en ce que** la zone (9) de dissipation électrique du canal d'écoulement (7) est réalisée dans et/ou sur le capot de boîtier (19).
